# EUROPEAN PATENT APPLICATION

(11) **EP 4 597 656 A1**
(43) Date of publication of application: **06.08.2025**
(21) Application number: 24218088.3
(22) Date of filing: 06.12.2024
(51) Int. Cl.: H01M 10/04, H01M 10/0587, H01M 50/107, H01M 50/167, H01M 50/538, H01M 50/578

(54) **CYLINDRICAL SECONDARY BATTERY**

(30) Priority: 31.01.2024 KR 20240014682
(71) Applicant: SAMSUNG SDI CO., LTD., Yongin-si, Gyeonggi-do 17084 (KR)
(72) Inventor: JUN, Woo Tae, 17084 Yongin-si (KR); KO, Sung Gwi, 17084 Yongin-si (KR); KIM, Myung Seob, 17084 Yongin-si (KR); PARK, Gun Gue, 17084 Yongin-si (KR); YU, Gwan Hyeon, 17084 Yongin-si (KR); YOO, Yoon Sun, 17084 Yongin-si (KR); LEE, Ho Jae, 17084 Yongin-si (KR); JUNG, Hyun Ki, 17084 Yongin-si (KR); LEE, Dong Sub, 17084 Yongin-si (KR); OH, Hwan Jun, 17084 Yongin-si (KR)
(74) Representative: Marks & Clerk LLP

(57) **Abstract**

A cylindrical secondary battery including an electrode assembly including a negative electrode plate and a positive electrode plate; a cylindrical can accommodating the electrode assembly and including a terminal hole in one side of the cylindrical can and an open inlet in another side of the cylindrical can; a terminal coupled to the cylindrical can through the terminal hole; and a negative electrode current collector in the cylindrical can and electrically connecting the cylindrical can to the negative electrode plate. The negative electrode current collector includes a notch groove or a cutting hole configured to be cut in response to an increase in pressure in the cylindrical can.

## Description

### BACKGROUND

### 1. Field

Embodiments relate to a cylindrical secondary battery capable of facilitating discharge of gas upon occurrence of a predetermined event.

### 2. Description of the Related Art

Generally, a cylindrical secondary battery includes a cylindrical electrode assembly, a cylindrical can accommodating the electrode assembly and an electrolyte, and a cap assembly coupled to an opening in the can to seal the can and electrically connected to the electrode assembly. The cap assembly electrically connects the electrode assembly to an external component such as a bus bar.

The electrode assembly is formed by placing a positive electrode and a negative electrode on opposite surfaces of a separator and winding the positive electrode, the separator, and the negative electrode in the form of a jelly roll.

A terminal mounted so as to be insulated from the cylindrical can is electrically connected to a first current collector, and the first current collector is electrically connected to one electrode of the electrode assembly. The cylindrical can is electrically connected to a second current collector, and the second current collector is electrically connected to the other electrode of the electrode assembly.

The second current collector block is inside of the cylindrical can in order to be electrically connected to an end portion of the electrode assembly. However, if a fire occurs in the cylindrical can, it is difficult to withdraw the electrode assembly due to the second current collector.

The information disclosed in this section is provided only for enhancement of understanding of the background of the disclosure and therefore it may contain information that does not form the related art.

### SUMMARY

Embodiments provide a cylindrical secondary battery capable of inducing deformation of a negative electrode current collector upon occurrence of a fire, thereby facilitating withdrawal of an electrode assembly.

Embodiments provide a cylindrical secondary battery in which the negative electrode current collector is implemented as an assembly of parts, and thus is capable of being easily deformed upon occurrence of a fire.

A cylindrical secondary battery according to an embodiment includes an electrode assembly including a negative electrode plate and a positive electrode plate; a cylindrical can accommodating the electrode assembly and including a terminal hole in, e.g. formed in, one side of the cylindrical can and an open inlet in, e.g. formed in, another side of the cylindrical can; a terminal coupled to the cylindrical can through the terminal hole; and a negative electrode current collector in, e.g. located in, the cylindrical can and electrically connecting the cylindrical can to the negative electrode plate, the negative electrode current collector including a notch groove or a cutting hole therein, e.g. formed therein so as to be cut in response to an increase in pressure in the cylindrical can.

In some examples, the notch groove or the cutting hole may extend, e.g. may be formed so as to extend, across the negative electrode current collector.

In some examples, the negative electrode current collector may include a body portion in contact with, e.g. mounted in contact with, the negative electrode plate, an extension portion extending outward from the body portion and in contact with, e.g. mounted in contact with, the negative electrode plate, and a wing portion extending outward from the body portion and being spaced apart from the extension portion and fixed to the cylindrical can.

In some examples, the notch groove or the cutting hole may be in, e.g. formed in, at least one of the body portion, the extension portion, or the wing portion.

In some examples, the body portion may have a circular plate shape and may include a circular hole at, e.g. formed at, the center thereof.

In some examples, the negative electrode current collector may include two or more extension portions and two or more wing portions, and the extension portions and the wing portions may be alternately arranged in a circumferential direction.

In some examples, the notch groove may be in, e.g. formed in, the body portion and the extension portion and may extend radially outward with respect to the center point at the center of the body portion.

In some examples, the notch groove may be in, e.g. formed in, the body portion having a flat plate shape and may extend radially outward with respect to the center point at the center of the body portion.

In some examples, the notch groove may be in, e.g. formed in, the body portion including a central hole therein, e.g. formed therein, and may extend radially outward with respect to the central hole at the center of the body portion.

In some examples, the negative electrode current collector may further include a central connection portion configured to connect a plurality of parts of the body portion divided by the cutting hole.

In some examples, the central connection portion may include a first connection body facing the body portion and a first fixing protrusion protruding from the first connection body and extending into a connection hole in, e.g. formed in, the body portion and including a deformation portion fixing the central connection portion to the body portion.

In some examples, the central connection portion may include a second connection body having a larger area than a central hole at, e.g. formed at, the center of the body portion and a second fixing protrusion protruding from the second connection body and extending into the central hole in the body portion and including a deformation portion fixing the central connection portion to the body portion.

A cylindrical secondary battery according to an embodiment includes an electrode assembly including a negative electrode plate and a positive electrode plate; a cylindrical can accommodating the electrode assembly and including a terminal hole formed in one side of the cylindrical case and an open inlet in another side of the cylindrical can; a terminal coupled to the cylindrical can through the terminal hole; and a negative electrode current collector in the cylindrical can and electrically connecting the cylindrical can to the negative electrode plate. The negative electrode current collector includes an assembly of two or more parts divided by a cutting hole.

In some examples, the negative electrode current collector may include a body portion in, e.g. mounted in, contact with the negative electrode plate, an extension portion extending outward from the body portion and in, e.g. mounted in contact with the negative electrode plate, a wing portion extending outward from the body portion and spaced apart from the extension portion and fixed to the cylindrical can, and a central connection portion configured to connect two or more parts of the body portion divided by the cutting hole.

In some examples, the cutting hole may be in, e.g. formed in, the body portion and the extension portion and may extend radially outward with respect to the center point located at the center of the body portion.

In some examples, the cutting hole may be in, e.g. formed in, the body portion having a flat plate shape and may extend radially outward with respect to the center point at the center of the body portion.

In some examples, the negative electrode current collector may include two or more extension portions and two or more wing portions, the number of extension portions and the number of wing portions may be identical, and the body portion may be split into the same number of parts as the number of extension portions.

In some examples, the central connection portion may be at the center of the body portion.

In some examples, the body portion may have, e.g. may be formed in, a planar shape and may include a plurality of inner holes therein, e.g. formed therein, and facing the central connection portion.

In some examples, the number of inner holes may be equal to the number of wing portions.

In some examples, the central connection portion may include a third connection body facing the body portion and a plurality of third fixing protrusions protruding from the third connection body and extending into the inner holes in, e.g. formed in, the body portion and include a deformation portion fixing the central connection portion to the body portion.

In some examples, the third connection body may be on, e.g. mounted on, an upper side or a lower side of the body portion.

At least some of the above and other features of the invention are set out in the claims.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of example embodiments that follows, and the disclosure is not to be construed as limited to what is shown in such drawings. In the drawings:
FIG. 1 is a bottom perspective view of a cylindrical secondary battery according to an embodiment;
FIG. 2 is a cross-sectional view of the cylindrical secondary battery according to the embodiment;
FIG. 3 is an enlarged cross-sectional view showing a state in which a negative electrode current collector is fixed to a cylindrical can according to an embodiment;
FIG. 4 is a perspective view showing a negative electrode current collector according to an embodiment;
FIG. 5 is a plan view showing the negative electrode current collector according to the embodiment;
FIG. 6 is a plan view showing another example of a notch groove according to an embodiment;
FIG. 7 is a perspective view showing a state in which a central hole is formed in the negative electrode current collector according to an embodiment;
FIG. 8 is a plan view showing a state in which the central hole is formed in the negative electrode current collector according to the embodiment;
FIG. 9 is a plan view showing a state in which the negative electrode current collector is split into a plurality of parts according to an embodiment;
FIG. 10 is a front view showing a state in which a central connection portion is fitted to the negative electrode current collector according to an embodiment;
FIG. 11 is a front view showing a state in which the central connection portion is fixed to the negative electrode current collector according to an embodiment;
FIG. 12 is a plan view showing a state in which the negative electrode current collector is split into a plurality of parts according to an embodiment;
FIG. 13 is a front view showing a state in which the central connection portion is fitted into the central hole according to an embodiment;
FIG. 14 is a front view showing a state in which the central connection portion is compressed to be fixed to the negative electrode current collector according to an embodiment;
FIG. 15 is a plan view showing a state in which the central connection portion is fitted into the central hole according to an embodiment;
FIG. 16 is a plan view showing a state in which the central connection portion is compressed to be fixed to the negative electrode current collector according to an embodiment;
FIG. 17 is a plan view showing another example of a cutting hole according to an embodiment;
FIG. 18 is a plan view showing a body portion and a central connection portion formed so as to be inserted into inner holes in the body portion according to an embodiment;
FIG. 19 is a plan view showing a state in which the central connection portion is connected to the inner holes in the body portion according to the embodiment;
FIG. 20 is a front view showing a state in which the central connection portion is fitted into the inner holes according to an embodiment;
FIG. 21 is a front view showing a state in which the central connection portion is compressed to be fixed to the body portion according to an embodiment;
FIG. 22 is a plan view showing the inner holes formed in the body portion according to an embodiment;
FIG. 23 is a front view showing a state in which the central connection portion is fitted to an upper side of the body portion according to an embodiment;
FIG. 24 is a front view showing a state in which the central connection portion is coupled to the body portion according to an embodiment;
FIG. 25 is a cross-sectional view showing a state in which the notch groove is formed in the body portion of the negative electrode current collector according to an embodiment;
FIGs. 26 and 27 are plan views showing various examples of cutting holes formed in the negative electrode current collector according to an embodiment; and
FIGs. 28 and 29 are plan views showing various examples of cutting holes formed in the negative electrode current collector including the central hole formed therein according to an embodiment.

### DETAILED DESCRIPTION

Hereinafter, embodiments will be described in detail with reference to the accompanying drawings.

Embodiments are provided to more fully illustrate the disclosure to a person having ordinary skill in the art, and the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description, and same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups thereof.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

Preferred embodiments will be described in detail with reference to the accompanying drawings so that those skilled in the art to which the disclosure pertains may easily carry out the embodiments.

Throughout the specification, elements having similar constitutions and operations are denoted by the same reference numerals. When one element is referred to as being electrically coupled to another element, the element may be directly coupled to the other element or indirectly coupled to the other element via one or more intervening elements.

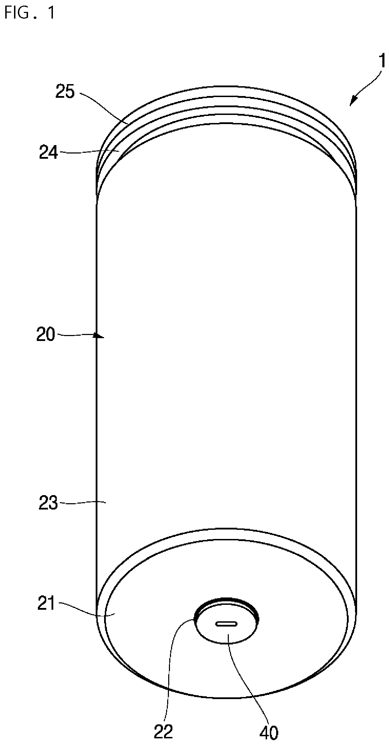

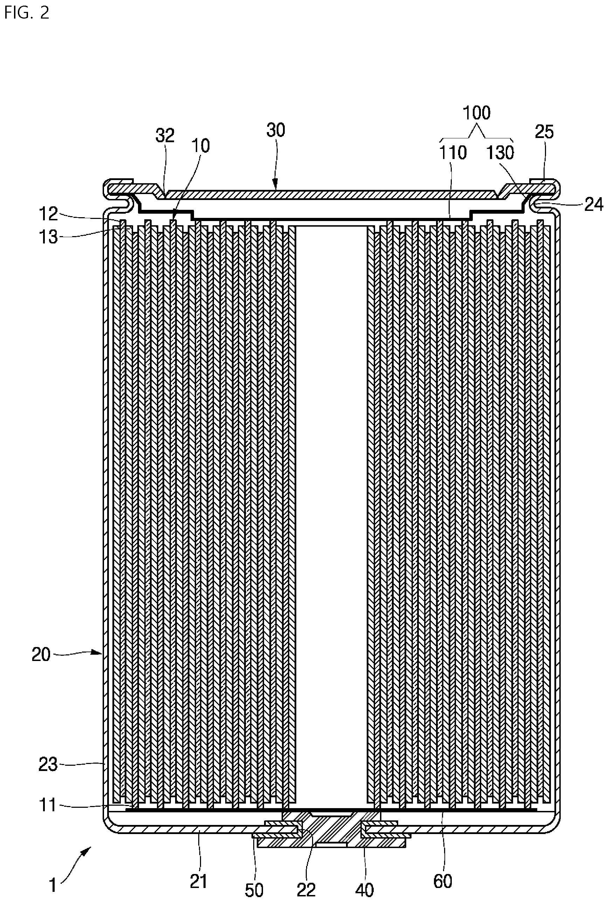

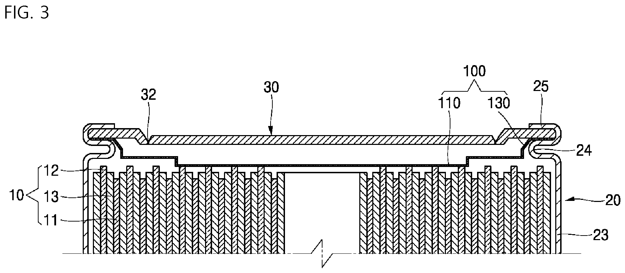

Hereinafter, a cylindrical secondary battery 1 according to an embodiment will be described with reference to the accompanying drawings. FIG. 1 is a bottom perspective view of a cylindrical secondary battery 1 according to an embodiment, FIG. 2 is a cross-sectional view of the cylindrical secondary battery 1 according to the embodiment, and FIG. 3 is an enlarged cross-sectional view showing a state in which a negative electrode current collector 100 is fixed to a cylindrical can 20 according to an embodiment.

As shown in FIGs. 1 to 3, the cylindrical secondary battery 1 according to an embodiment may include an electrode assembly 10, a cylindrical can 20, a cap plate 30, a terminal 40, a positive electrode current collector 60, and a negative electrode current collector 100. The cylindrical secondary battery 1 may further include at least one of a gasket 50 or an insulating gasket (not shown).

The cylindrical can 20 may be modified, as long as the cylindrical can 20 accommodates the electrode assembly 10 and includes a terminal hole 22 formed in one side, e.g. end, thereof and an open inlet formed in the other side, e.g. end, thereof. The cylindrical can 20 may include a circular base portion 21 and a side surface portion 23 extending from an edge of the base portion 21 in a vertical longitudinal direction. The base portion 21 and the side surface portion 23 of the cylindrical can 20 may be integrally formed with each other.

The circular base portion 21 may have a flat circular plate shape and may include a terminal hole 22 in, e.g. formed through, the central portion thereof. The terminal 40 may extend through the terminal hole 22 and be coupled to the base portion 21.

A gasket 50 for sealing and electrical insulation may be between the terminal hole 22 and the terminal 40. The gasket 50 may block contact between the terminal 40 and the cylindrical can 20 and may thereby electrically isolate the terminal 40 and the cylindrical can 20 from each other. The terminal hole 22 in the base portion 21 may be sealed by the gasket 50 and the terminal 40. The gasket 50 may be made of resin such as polyethylene (PE), polypropylene (PP), or polyethylene terephthalate (PET).

During a process of manufacturing the cylindrical secondary battery 1, the upper portion of the cylindrical can 20 (based on the orientation shown in FIG. 2) is open. Therefore, during a process of manufacturing the cylindrical secondary battery 1, the electrode assembly 10 may be inserted into the cylindrical can 20 through the open upper portion of the cylindrical can 20 together with an electrolyte. In the illustrated embodiment, the electrolyte and the electrode assembly 10 may be inserted into the cylindrical can 20 in a direction from the open upper portion toward the lower portion. After the electrolyte and the electrode assembly 10 are inserted into the cylindrical can 20, the cap plate 30 may be coupled to the open upper portion of the cylindrical can 20 to seal the interior of the cylindrical can 20.

The electrolyte may be configured to allow lithium ions to move between a positive electrode plate 11 and a negative electrode plate 12, which constitute the electrode assembly 10. The electrolyte may be a non-aqueous organic electrolyte that is a mixture of lithium salt and a high-purity organic solvent. In other embodiments, the electrolyte may be a polymer using a polymer electrolyte or may be a solid electrolyte. However, the type of electrolyte is not limited thereto.

The cylindrical can 20 may be formed of or include steel, a steel alloy, aluminum, an aluminum alloy, or an equivalent thereto. However, the material of the cylindrical can 20 is not limited thereto. The cylindrical can 20 may include a beading portion 24 and a crimping portion 25 respectively below and above, e.g. formed below and above, the cap plate 30 to prevent the electrode assembly 10 from being separated from the cylindrical can 20.

The beading portion 24 may have a shape that is depressed toward the inside of the cylindrical can 20 while surrounding a lower edge of the cap plate 30. The crimping portion 25 connected to the beading portion 24 may be bent toward the inside of the cylindrical can 20 while surrounding an upper edge of the cap plate 30.

Because the beading portion 24 is formed after the electrode assembly 10 is inserted into the cylindrical can 20 through the open upper end portion of the cylindrical can 20, it may be possible to prevent the electrode assembly 10 from being separated from the cylindrical can 20.

The electrode assembly 10 may include a positive electrode plate 11 coated with a positive electrode active material, a negative electrode plate 12 coated with a negative electrode active material, and a separator 13 between, e.g. interposed between, the positive electrode plate 11 and the negative electrode plate 12 to prevent electrical short circuit between the positive electrode plate 11 and the negative electrode plate 12 while allowing lithium ions to move between the positive electrode plate 11 and the negative electrode plate 12. After the positive electrode plate 11, the negative electrode plate 12, and the separator 13 are stacked, the electrode assembly 10 may be wound from a winding leading end to have a substantially cylindrical shape. Further, the electrode assembly 10 may include a positive electrode uncoated portion protruding downward from the positive electrode plate 11 and having no positive electrode active material coated thereon, and a negative electrode uncoated portion protruding upward from the negative electrode plate 12 and having no negative electrode active material coated thereon.

The positive electrode plate 11 may be configured such that a positive electrode active material, such as a transition metal oxide, is coated on at least one surface of a plate-shaped metal foil made of aluminum (Al). The positive electrode plate 11 may be provided at the lower end portion thereof with a positive electrode uncoated portion, on which the positive electrode active material is not coated. The positive electrode uncoated portion may protrude downward from the electrode assembly 10. For example, the positive electrode uncoated portion of the positive electrode plate 11 may protrude farther downward than the negative electrode plate 12 and the separator 13.

The negative electrode plate 12 may be configured such that a negative electrode active material, such as graphite or carbon, is coated on at least one surface of a plate-shaped metal foil made of copper (Cu) or nickel (Ni). The negative electrode plate 12 may be at the upper end portion thereof with a negative electrode uncoated portion, on which the negative electrode active material is not coated. The negative electrode uncoated portion may protrude upward from the electrode assembly 10. The negative electrode uncoated portion of the negative electrode plate 12 may protrude farther upward than the positive electrode plate 11 and the separator 13.

The separator 13 may be made of polyethylene (PE) or polypropylene (PP). However, the embodiments are not limited thereto. The separator 13 may be configured to prevent an electrical short circuit between the positive electrode plate 11 and the negative electrode plate 12 while allowing lithium ions to move between the positive electrode plate 11 and the negative electrode plate 12.

The terminal 40 may any suitable configuration as long as the terminal 40 is coupled to the cylindrical can 20 through the terminal hole 22. The terminal 40 may extend into the terminal hole 22 in the base portion 21 of the cylindrical can 20 and may be electrically connected to the positive electrode current collector 60. The terminal 40 may be made of a material identical or similar to that of the positive electrode current collector 60 and/or the positive electrode plate 11. The diameter of a portion of the terminal 40 exposed to the outside of the cylindrical can 20 and the diameter of a portion of the terminal 40 inside the cylindrical can 20 may be larger than the diameter of a portion of the terminal 40 in, e.g. located in, the terminal hole 22.

For convenience of description, the portion of the terminal 40 exposed to the outside of the cylindrical can 20 is defined as a head of the terminal 40, and the portion of the terminal 40 located in the cylindrical can 20 and in contact with the positive electrode current collector 60 is defined as a body of the terminal 40.

The terminal 40 may be coupled to the terminal hole 22 in the base portion 21, and then the head of the terminal 40 may be compression-deformed (compression-molded) through a processing method such as pressing or spinning and thus may come into close contact with the outer surface of the base portion 21. The gasket 50 may be between the terminal 40 and the terminal hole 22 to electrically insulate and seal between the terminal 40 and the cylindrical can 20. The terminal 40 may be electrically connected to the positive electrode plate 11 of the electrode assembly 10 via the positive electrode current collector 60.

The cap plate 30 may be a circular metal plate and may be coupled to the upper end portion of the cylindrical can 20. The cap plate 30 may be fixed to the cylindrical can 20 by forming the crimping portion 25 at the upper end of the cylindrical can 20 in a state in which the edge of the cap plate 30 is seated on the beading portion 24 provided at the cylindrical can 20. The cap plate 30 may be seated on the beading portion 24 in a state in which the open inlet of the cylindrical can 20 faces upward.

The cap plate 30 may be fixed and electrically connected to the negative electrode current collector 100 and the cylindrical can 20 through welding. The cap plate 30 may have the same polarity as the negative electrode current collector 100. For example, the cap plate 30 may have a circular plate shape.

In other embodiments, an insulating gasket, which is an insulating member, may be additionally mounted between the cap plate 30 and the cylindrical can 20. and when the insulating gasket is mounted, the cap plate 30 and the cylindrical can 20 may not be electrically connected to each other and thus may not have the same polarity. In an embodiment in which the insulating member is mounted, the cap plate 30 may be electrically neutral, and the cylindrical can 20 may be electrically negative.

The cap plate 30 may include a notch 32 therein ,e.g. formed thereinand configured to be opened at a predetermined pressure. In response to the internal pressure in the cylindrical can 20 reaching or exceeding a rupture pressure, the notch 32 in the cap plate 30 may rupture, thereby preventing the cylindrical secondary battery 1 from exploding. For example, if excessive internal pressure occurs in the cylindrical can 20, the notch 32 may rupture, thereby discharging the excessive internal pressure in the cylindrical can 20. The notch 32 in the cap plate 30 may be spaced apart from the central portion of the cap plate 30 and may have a ring shape when viewed in plan. In another example, the notch 32 may have multiple patterns. The embodiments of the present disclosure are not limited to any specific shape of the notch 32.

The positive electrode current collector 60 may be a circular metal plate shaped corresponding to the lower surface of the electrode assembly 10. The planar size of the positive electrode current collector 60 may be equal to or smaller than the size of the lower surface of the electrode assembly 10. The positive electrode current collector 60 may be made of aluminum (Al). The upper surface of the positive electrode current collector 60 may be in contact with the lower portion of the electrode assembly 10 and may be fixed thereto through welding. The positive electrode current collector 60 may be fixed and electrically connected to the positive electrode plate 11, which is exposed below the electrode assembly 10. The lower surface of the positive electrode current collector 60 may be in contact with the upper surface of the terminal 40 and may be fixed thereto through welding, and therefore the positive electrode current collector 60 may be fixed and electrically connected to the terminal 40. The positive electrode current collector 60 may be located and electrically connected between the positive electrode plate 11 of the electrode assembly 10 and the terminal 40 and thus may act as a passage for flow of current therebetween.

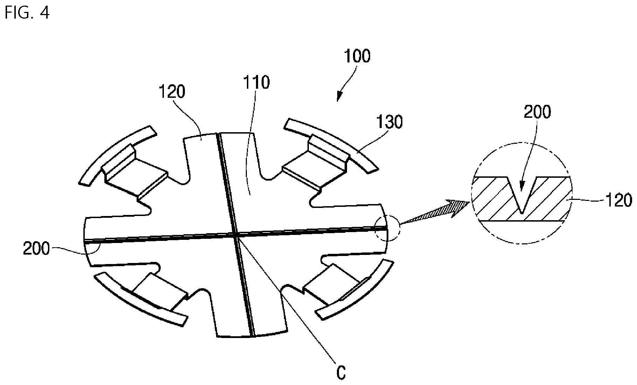

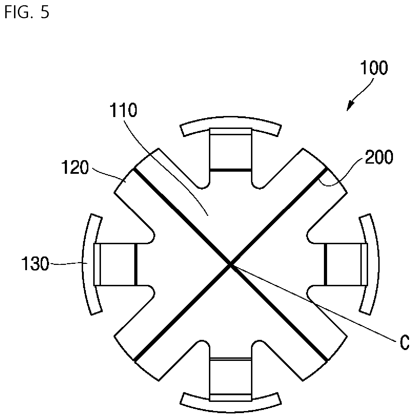

FIG. 4 is a perspective view showing a negative electrode current collector 100 according to an embodiment, and FIG. 5 is a plan view showing the negative electrode current collector 100 according to the embodiment. As shown in FIGs. 3 to 5, the negative electrode current collector 100 may be modified, as long as the negative electrode current collector 100 is located in the cylindrical can 20, electrically connects the cylindrical can 20 to the negative electrode plate 12, and includes a notch groove 200 or a cutting hole 300 formed therein that is configured to be cut in response to an increase in pressure in the cylindrical can 20.

The negative electrode current collector 100 according to the embodiment may include a body portion 110 mounted in contact with the negative electrode plate 12, one or more extension portions 120 extending outward from the body portion 110 and mounted in contact with the negative electrode plate 12 together with the body portion 110, and one or more wing portions 130 extending outward from the body portion 110 and being spaced apart (in a circumferential direction) from the extension portions 120 and fixed to the cylindrical can 20. The negative electrode current collector 100 may further include a notch groove 200 formed therein.

Because the notch groove 200 is formed in the negative electrode current collector 100, in response to the internal pressure in the cylindrical can 20 increasing or in response to a fire occurring, the negative electrode current collector 100 may be opened or disassembled along the notch groove 200. Therefore, in response to the internal pressure in the cylindrical can 20 increasing or in response to a fire occurring, the negative electrode current collector 100 may be separated, and thus the electrode assembly 10, which is an internal heat source, may be quickly and easily withdrawn.

The notch groove 200 may be formed in at least one of the body portion 110, the extension portions 120, or the wing portions 130. The notch groove 200 may be varied in shape and number. As shown in FIG. 5, the notch groove 200 may be formed in the body portion 110 and the extension portions 120 and may be radially formed with respect to a center point C located at the center of the body portion 110.

In some embodiments, the notch groove 200 may be formed in the body portion 110 having a flat plate shape and may extend in a cross shape with respect to the center point C of the body portion 110. The notch groove 200 in the negative electrode current collector 100 may be varied in shape, length, and thickness.

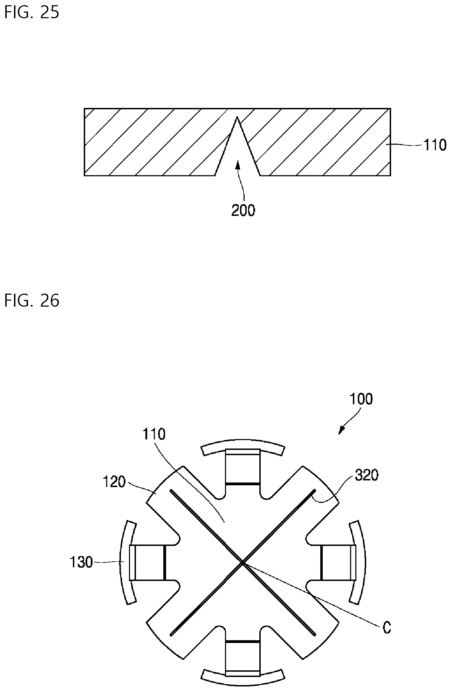

FIG. 25 is a cross-sectional view of the notch groove 200 is in the body portion 110 of the negative electrode current collector 100 according to an embodiment. As shown in FIG. 25, in an embodiment in which the notch groove 200 is in the body portion 110 and the thickness of the body portion 110 is approximately 1 mm, the thickness of a part of the body portion 110 in which the notch groove 200 is formed may be in a range from approximately 0.05 mm to approximately 0.3 mm. If the thickness of the part of the body portion 110 in which the notch groove 200 is formed is less than approximately 0.05 mm, the structural rigidity of the body portion 110 may decrease, which may cause the body portion 110 to bend even without external force. If the thickness of the part of the body portion 110 in which the notch groove 200 is formed exceeds approximately 0.3 mm, the structural rigidity of the body portion 110 may increase, which may interfere with deformation of the body portion 110 upon occurrence of an event. The thickness of the part of the body portion 110 in which the notch groove 200 is formed may be in a range from approximately 5% to approximately 30% of the thickness of the body portion 110.

As shown in FIGs. 3 and 4, the body portion 110 may be formed in a circular plate shape corresponding to the upper portion of the electrode assembly 10. In other embodiments, the body portion 110 may be formed in various plate shapes other than the circular plate shape. Because the lower surface of the body portion 110 (based on the orientation shown in FIG. 2) is in contact with and welded to the upper portion of the electrode assembly 10, the body portion 110 may be fixed and electrically connected to the negative electrode plate 12 exposed above the electrode assembly 10.

In the illustrated embodiment, the negative electrode current collector 100 includes a plurality of extension portions 120 and a plurality of wing portions 130, and the plurality of extension portions 120 and the plurality of wing portions 130 may be alternately arranged in a circumferential direction. According to an embodiment, the number of extension portions 120 and the number of wing portions 130 may be identical to each other, and the body portion 110 may be split into the same number of parts as the number of extension portions 120. In one or more embodiments in which four extension portions 120 and four wing portions 130 are alternately arranged in the circumferential direction, the notch groove 200 or the cutting hole 300, which induces split of the body portion 110, may be formed in a cross shape. Therefore, if the negative electrode current collector 100 is cut by external force, the negative electrode current collector 100 may be split into four parts. However, the embodiments are not limited thereto.

The wing portion 130 may have any suitable configuration as long as the wing portion 130 extends upward from the edge of the body portion 110 and is fixed to the cylindrical can 20. The negative electrode current collector 100 may include a plurality of wing portions 130, and the plurality of wing portions 130 may be spaced apart from each other along the edge of the body portion 110.

Although four wing portions 130 are illustrated as being symmetric to each other with respect to the center of the body portion 110, the embodiments are not limited thereto. The wing portion 130 may extend upward from the edge of the body portion 110 and be bent multiple times. The wing portion 130 may be further provided with bent portions sequentially bent in the outward direction of the body portion 110 and the upward direction. In other embodiments, the wing portion 130 may extend outward from the body portion 110 so as to be inclined without separate bent portions. The negative electrode current collector 100 may form a passage for flow of current between the negative electrode plate 12 of the electrode assembly 10 and the cylindrical can 20.

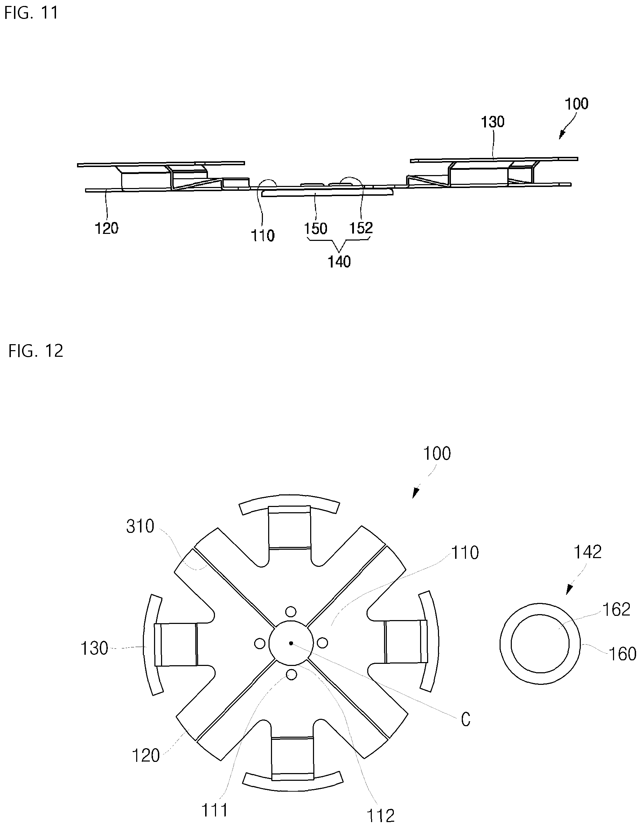

FIG. 12 is a plan view showing a state in which the negative electrode current collector 100 is split into a plurality of parts according to an embodiment. As shown in FIGs. 5 and 12, the notch groove 200 or the cutting hole 300 may be formed so as to extend across the negative electrode current collector 100. In some embodiments, the notch groove 200 or the cutting hole 300 may be formed in at least one of the body portion 110, the at least one extension portion 120, or the at least one wing portion 130.

As shown in FIG. 5, the body portion 110 may not have a separate hole at the center thereof, and the notch groove 200 may be formed in the body portion 110 and the one or more extensions 120. The notch groove 200 may extend radially outward with respect to the center point C located at the center of the body portion 110. Because the strength of the portion of the negative electrode current collector 100 in which the notch groove 200 is formed is lower than the strength of the portion of the negative electrode current collector 100 in which the notch groove 200 is not formed, the negative electrode current collector 100 may be split along the part thereof in which the notch groove 200 is formed by an external force applied thereto.

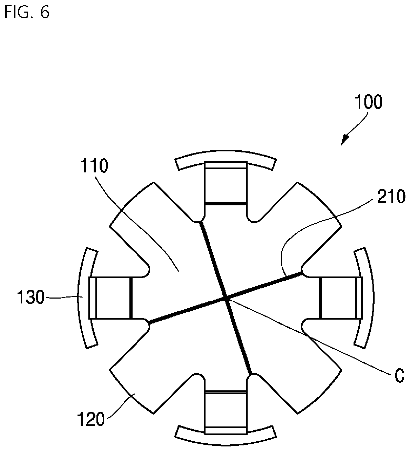

FIG. 6 is a plan view showing another embodiment of a notch groove 210. As shown in FIG. 6, the body portion 110 may not have a separate hole at the center thereof, and the notch groove 210 may be formed only in the body portion 110 of the negative electrode current collector 100. The notch groove 210 may extend radially outward with respect to the center point C at the center of the body portion 110. The notch groove 210 may pass through the center point C of the body portion 110, and an end of the notch groove 210 may be located at a portion of the body portion 110 that is located between the extension portion 120 and the wing portion 130.

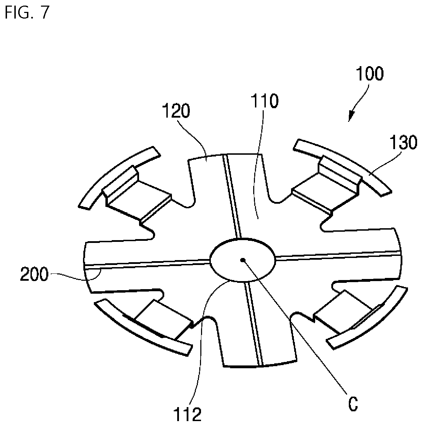

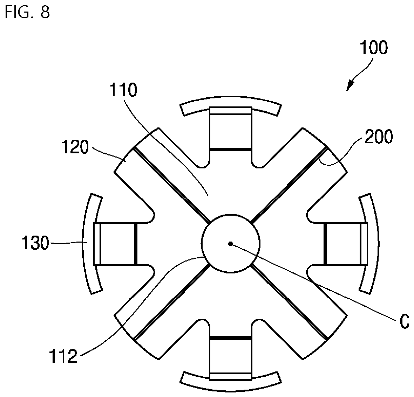

FIG. 7 is a perspective view depicting a central hole 112 in the negative electrode current collector 100 according to an embodiment, and FIG. 8 is a plan view depicting the central hole 112 in the negative electrode current collector 100.

As shown in FIGs. 7 and 8, the body portion 110 may have a circular plate shape, and a circular hole may be at the center (or substantially the center) of the body portion 110. Although the central hole 112 is formed at the center of the body portion 110, the notch groove 200 may be radially formed with respect to the center point C of the body portion 110.

In other embodiments, the notch groove 200 may be in the body portion 110 having the central hole 112 and may extend radially outward with respect to the central hole 112 at the center (or substantially the center) of the body portion 110.

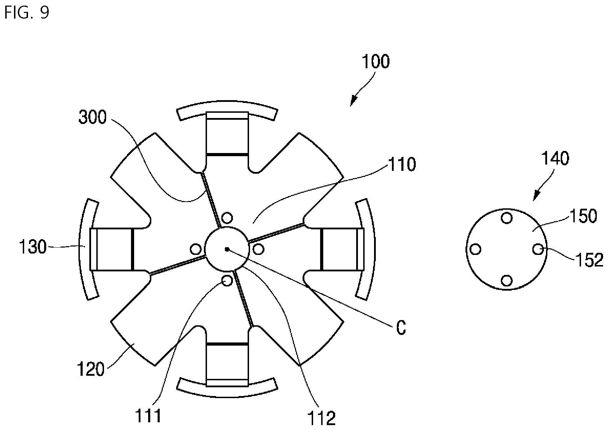

FIG. 9 is a plan view depicting a state in which the negative electrode current collector 100 is split into a plurality of parts according to an embodiment. As shown in FIG. 9, the negative electrode current collector 100 may be split into N equal parts by the cutting hole 300 formed therein. The negative electrode current collector 100 split into a plurality of parts may be fixed by a central connection portion 140. The number of N equal parts into which the negative electrode current collector 100 is split may vary depending on the number of wing portions 130. The negative electrode current collector 100 may have any suitable configuration as long as the negative electrode current collector 100 is in the cylindrical can 20, electrically connects the cylindrical can 20 to the negative electrode plate 12, and is an assembly of a plurality of parts divided by the cutting hole 300.

The negative electrode current collector 100 according to an embodiment may include a body portion 110 mounted in contact with the negative electrode plate 12, one or more extension portions 120 extending outward from the body portion 110 and mounted in contact with the negative electrode plate 12 together with the body portion 110, one or more wing portions 130 extending outward from the body portion 110 and being spaced apart (in the circumferential direction) from the one or more extension portions 120 and fixed to the cylindrical can 20, and a central connection portion 140 connecting a plurality of parts of the body portion 110 divided by the cutting hole 300. In some embodiments, the cutting hole 300 may be in the body portion 110 having a flat plate shape and may extend radially outward with respect to the center point C at the center (or substantially the center) of the body portion 110.

The central connection portion 140 may have any suitable configuration as long as the central connection portion 140 connects a plurality of parts of the body portion 110 divided by the cutting hole 300. The central connection portion 140 may be at the center (or substantially the center) of the body portion 110. The central connection portion 140 according to an embodiment may include a first connection body 150 facing the body portion 110 and a first fixing protrusion 152 protruding from the first connection body 150 and configured to be inserted into a connection hole 111 in the body portion 110 and fixed to the body portion 110 through deformation thereof by pressure of a press (i.e., a press or friction fit).

The first connection body 150 may be made of a material having a low thermal deformation temperature. In one or more embodiments, the first connection body 150 may be made of polyethylene terephthalate (PET). The first fixing protrusion 152 may be configured to be deformed at a temperature lower than a temperature at which the first connection body 150 is deformed. In one or more embodiments, the first connection body 150 and the first fixing protrusion 152 may be formed of different materials, and the deformation temperature of the first fixing protrusion 152 may be lower than the deformation temperature of the first connection body 150.

The first connection body 150 may have a circular plate shape, and the outer diameter of the first connection body 150 may be larger than the inner diameter of the central hole 112. The first connection body 150 may be mounted so as to abut or face the body portion 110.

The negative electrode current collector 100 may include a plurality of connection holes 111, and the plurality of connection holes 111 may be arranged along or around the outer circumference of the central hole 112. In an embodiment in which the negative electrode current collector 100 is split into four parts, each of four connection holes 111 may be provided in a respective one of the four parts. The number of connection holes 111 and the number of first fixing protrusions 152 may be identical to each other. The first fixing protrusion 152 having a pillar shape may pass through the connection hole 111 and may protrude outside the body portion 110.

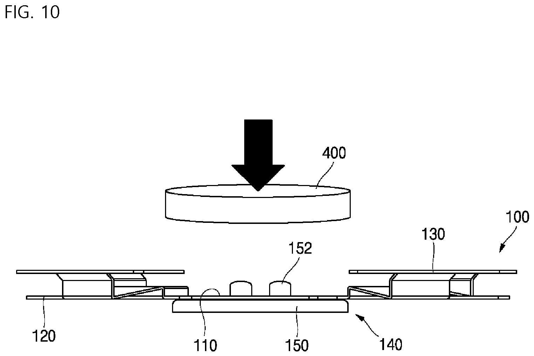

FIG. 10 is a front view showing a state in which the central connection portion 140 is fitted to the negative electrode current collector 100 according to an embodiment. As shown in FIG. 10, in a state in which the first connection body 150 is located below the body portion 110, each of the first fixing protrusions 152 may pass through one of the connection holes 111 and may protrude above the body portion 110. The body portion 110 may be temporarily assembled by the central connection portion 140. Thereafter, a pressing plate 400 may be moved downward toward the first fixing protrusion 152 of the central connection portion 140 at a position above the negative electrode current collector 100.

FIG. 11 is a front view depicting a state in which the central connection portion 140 is fixed to the negative electrode current collector 100 according to an embodiment. As shown in FIG. 11, the first fixing protrusion 152 may be deformed such that the diameter of the head of the first fixing protrusion 152 becomes larger than the diameter of the connection hole 111 such that the central connection portion 140 may be fixed to the body portion 110. The head of the first fixing protrusion 152 may be deformed into a rivet shape to be fixed to the body portion 110.

As shown in FIG. 12, if only the central hole 112 is in the body portion 110, the central connection portion 142 may include a second connection body 160 having a larger area than the central hole 112 at the center of the body portion 110 and a second fixing protrusion 162 protruding from the second connection body 160 configured to be inserted into the central hole 112 in the body portion 110 and fixed to the body portion 110 through deformation thereof by pressure of a press. In one or more embodiments, the second connection body 160, the second fixing protrusion 162, and the central hole 112 may each have a circular shape.

In order to allow the second fixing protrusion 162 to pass through the central hole 112 before performing pressing (e.g., heat pressing), the outer diameter of the second fixing protrusion 162 may be approximately 1 mm or more smaller than the inner diameter of the central hole 112. In order to prevent the second connection body 160 from passing through the central hole 112, the outer diameter of the second connection body 160 may be approximately 2 mm or more larger than the inner diameter of the central hole 112.

In one or more embodiments, the outer diameter of the second connection body 160 may be larger than the inner diameter of the central hole 112, and the outer diameter of the second fixing protrusion 162 may be smaller than the inner diameter of the central hole 112. The second fixing protrusion 162 may be at the center of the second connection body 160.

The cutting hole 310 may be in the body portion 110 and the extension portion 120 and may extend radially outward with respect to the center point C at the center (or substantially the center) of the body portion 110. For each segment of the cutting hole 310, a first end of the cutting hole 310, which is one end of the cutting hole 310, may extend toward the end of the extension portion 120, and a second end of the cutting hole 310, which is the other end of the cutting hole 310, may extend toward the center point C of the body portion 110.

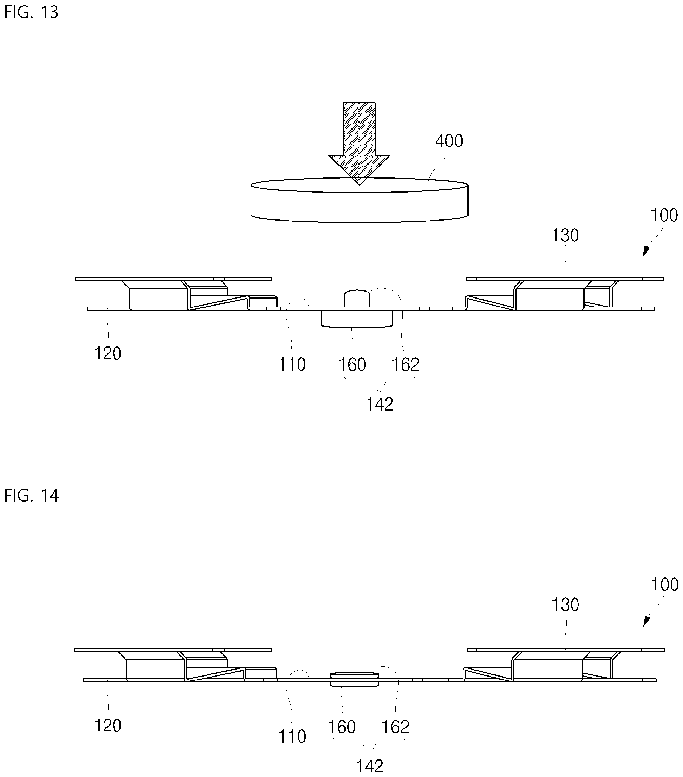

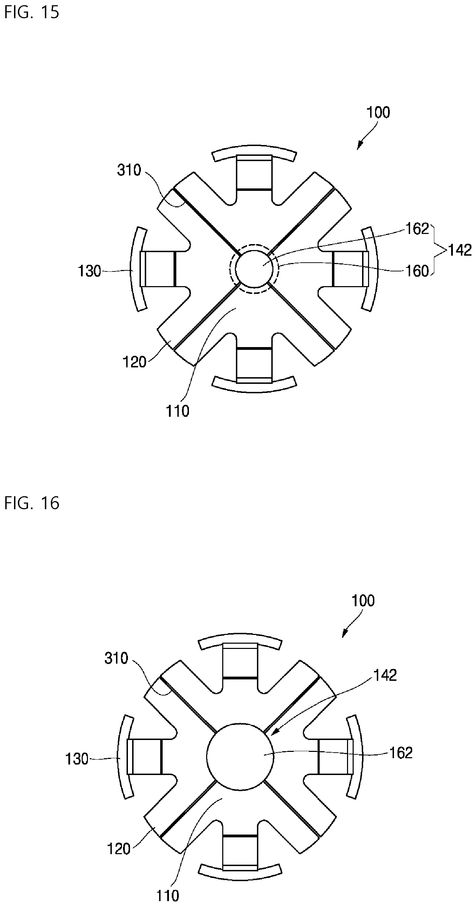

FIG. 13 is a front view depicting a state in which the central connection portion 142 is fitted into the central hole 112 according to an embodiment, and FIG. 15 is a plan view showing a state in which the central connection portion 142 is fitted into the central hole 112 according to the embodiment. As shown in FIGs. 13 and 15, in a state in which the second connection body 160 is located below the body portion 110, the second fixing protrusion 162 may pass through the central hole 112 and may protrude above the body portion 110. The body portion 110 may be temporarily assembled by the central connection portion 142. Thereafter, a pressing plate 400 may be moved downward toward the second fixing protrusion 162 of the central connection portion 142 at a position above the negative electrode current collector 100.

FIG. 14 is a front view showing a state in which the central connection portion 142 is compressed to be fixed to the negative electrode current collector 100 according to an embodiment, and FIG. 16 is a plan view showing a state in which the central connection portion 142 is compressed to be fixed to the negative electrode current collector 100 according to the embodiment. As shown in FIGs. 14 and 16, the second fixing protrusion 162 may be deformed by the pressing of the pressing plate 400 such that the diameter of the head of the second fixing protrusion 162 protruding above the body portion 110 becomes larger than the diameter of the central hole 112 such that the central connection portion 142 is fixed to the body portion 110. The head of the second fixing protrusion 162 may be deformed into a rivet shape to be fixed to the body portion 110.

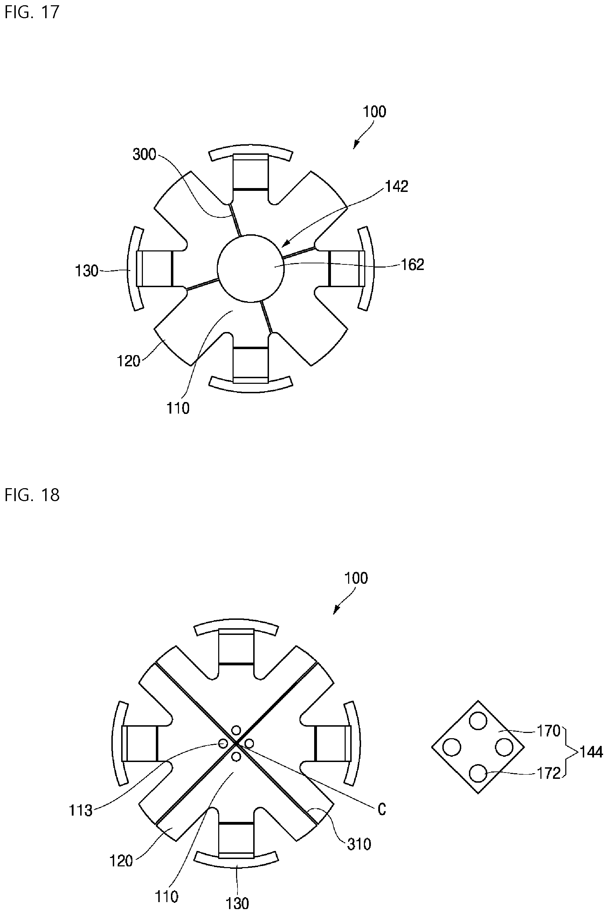

FIG. 17 is a plan view showing another example of a cutting hole 300 according to an embodiment. As shown in FIG. 17, the cutting hole 300 may be formed only in the body portion 110. The cutting hole 300 may extend radially outward with respect to the central connection portion 142 or the central hole 112 located at the center of the body portion 110. The cutting hole 300 may pass through the center point C of the body portion 110, and an end of each of the segments of the cutting hole 300 may be located at a portion of the body portion 110 that is between the extension portion 120 and the wing portion 130.

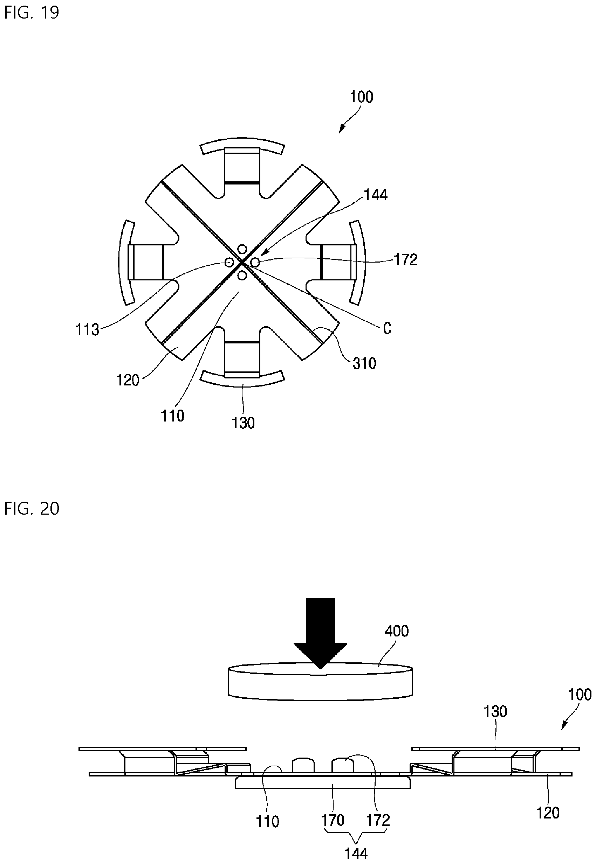

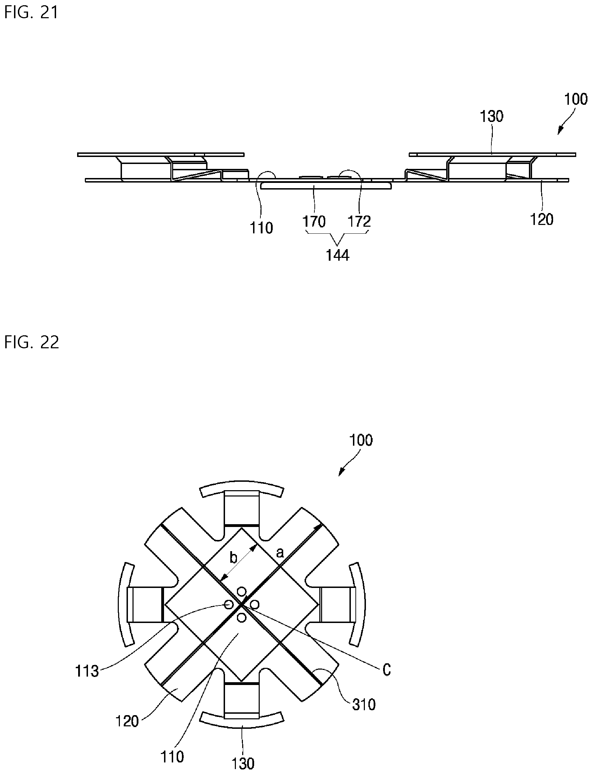

FIG. 18 is a plan view showing a body portion 110 and a central connection portion 144 configured to be inserted into inner holes 113 in the body portion 110 according to an embodiment, FIG. 19 is a plan view showing a state in which the central connection portion 144 is connected to the inner holes 113 in the body portion 110 according to the embodiment, and FIG. 22 is a plan view showing the inner holes 113 formed in the body portion 110 according to the embodiment. As shown in FIGs. 18, 19, and 22, a plurality of inner holes 113 may be in the center of the body portion 110. The body portion 110 may have a planar shape, and the plurality of inner holes 113 may face the central connection portion 144.

In an embodiment in which the negative electrode current collector 100 is split into four parts by the cutting hole 310 in the body portion 110 and the extension portion 120, each of the four inner holes 113 may be in a respective one of the four parts. The plurality of inner holes 113 may be spaced apart from each other with respect to the center point C of the body portion 110. The number of inner holes 113 may correspond to the number of wing portions 130.

In one embodiment, the central connection portion 144 may include a third connection body 170 facing the body portion 110 and third fixing protrusions 172 protruding from the third connection body 170 that are configured to be inserted into the inner holes 113 in the body portion 110 and fixed to the body portion 110 through deformation thereof by the pressure of a press.

The outer diameter of the third fixing protrusion 172 may be smaller than the inner diameter of the inner hole 113 in the negative electrode current collector 100. If the length of the third connection body 170 exceeds approximately 50% of the overall length of the body portion 110 and the extension portion 120 abutting the electrode assembly 10, the third connection body 170 may interfere with welding between the electrode assembly 10 and the negative electrode current collector 100. Therefore, the length of the third connection body 170 may be less than approximately 50% of the overall length of the body portion 110 and the extension portion 120 abutting the electrode assembly 10.

The third connection body 170 may be connected to four third fixing protrusions 172. In one or more embodiments, each of the length and the width of the third connection body 170 may be approximately 3 mm or more. The distance between the center point C of the body portion 110 and the end of the extension portion 120 may be defined as a first length a. The distance between the outermost edge of the central connection portion 144 located on the body portion 110 and the center point C may be defined as a second length b. The second length b may be less than approximately 50% of the first length a.

FIG. 20 is a front view showing a state in which the central connection portion 144 is fitted into the inner holes 113 according to an embodiment. As shown in FIG. 20, in a state in which the third connection body 170 is located below the body portion 110, the third fixing protrusions 172 may pass through the inner holes 113 and may protrude above the body portion 110. The body portion 110 may be temporarily assembled by the central connection portion 144. Thereafter, a pressing plate 400 may be moved downward toward the third fixing protrusions 172 of the central connection portion 144 at a position above the negative electrode current collector 100.

FIG. 21 is a front view showing a state in which the central connection portion 144 is compressed to be fixed to the body portion 110 according to an embodiment. As shown in FIG. 21, the third fixing protrusion 172 may be deformed by pressing of the pressing plate 400 such that the diameter of the head of the third fixing protrusion 172 protruding above the body portion 110 becomes larger than the diameter of the inner hole 113 such that the central connection portion 144 may be fixed to the body portion 110. The head of the third fixing protrusion 172 may be deformed into a rivet shape to be fixed to the body portion 110.

In some embodiments, the third connection body 170 may be mounted on any one of the upper side or the lower side of the body portion 110. An embodiment in which the third connection body 170 is mounted on the upper side of the body portion 110 will be described with reference to the accompanying drawings.

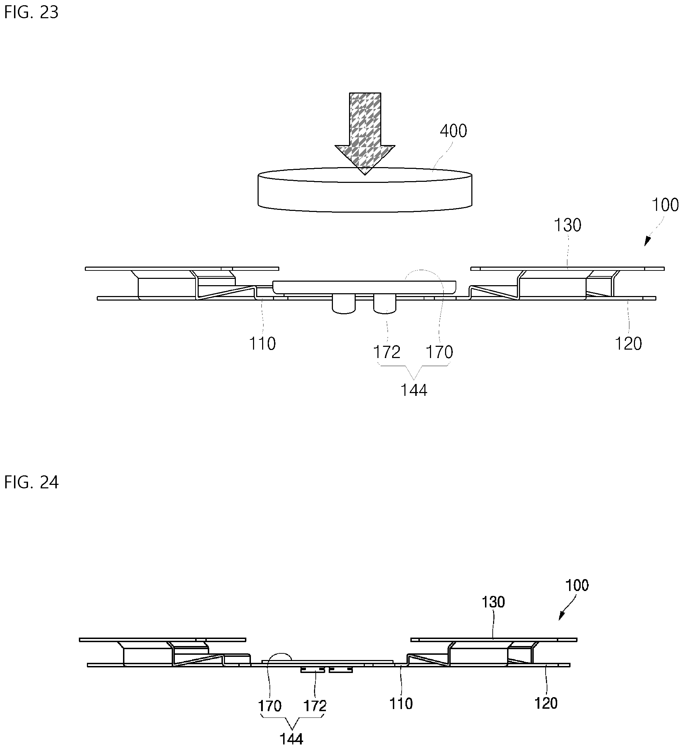

FIG. 23 is a front view showing a state in which the central connection portion 144 is fitted to the upper side of the body portion 110 according to an embodiment. As shown in FIG. 23, in a state in which the third connection body 170 is located above the body portion 110, the third fixing protrusions 172 may pass down through the inner holes 113 and may protrude below the body portion 110. The third fixing protrusion 172 may be at a lower side thereof with a separate flat surface, and the body portion 110 may be temporarily assembled by the central connection portion 144. Thereafter, a pressing plate 400 may be moved upwards toward the third connection body 170 of the central connection portion 144 at a position above the negative electrode current collector 100.

FIG. 24 is a front view showing a state in which the central connection portion 144 is coupled to the body portion 110 according to an embodiment. As shown in FIG. 24, the third fixing protrusions 172 may be deformed by pressing of the pressing plate 400 such that the diameter of the head of the third fixing protrusions 172 protruding below the body portion 110 becomes larger than the diameter of the inner hole 113 such that the central connection portion 144 may be fixed to the body portion 110.

Because the third connection body 170 is mounted between the body portion 110 of the negative electrode current collector 100 and the cap plate 30, it may be possible to obtain insulating effect of preventing electrical connection between the negative electrode current collector 100 and the cap plate 30.

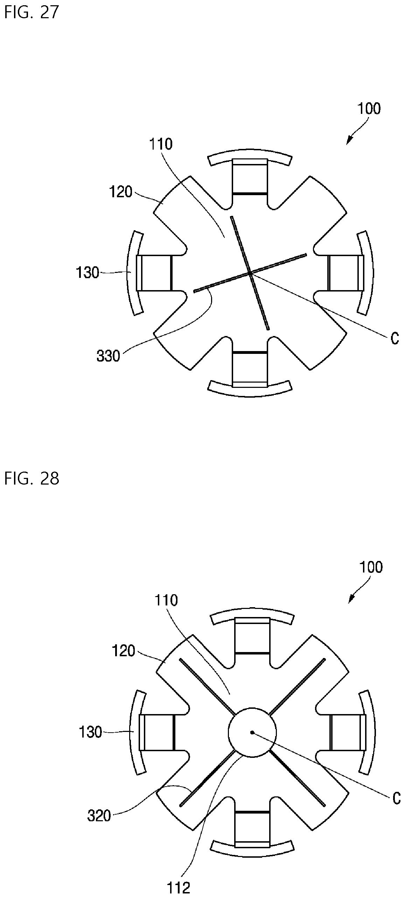

FIGs. 26 and 27 are plan views showing various embodiments of cutting holes 320 and 330 in the negative electrode current collector 100. As shown in FIG. 26, the cutting hole 320 may be formed in the body portion 110 and each of the one or more extension portions 120 of the negative electrode current collector 100. Because the cutting hole 320 does not extend to the end of the extension portion 120, the negative electrode current collector 100 may be formed as a single element (i.e., the negative electrode current collector 100 may not be separated into two or more parts by the cutting hole 320). The cutting hole 320 may pass through the center point C of the body portion 110 and may extend radially outward therefrom.

As shown in FIG. 27, the cutting hole 330 may be formed only in the body portion 110. In one or more embodiments, an end of the cutting hole 330 may not communicate with the outside of the body portion 110. Therefore, the negative electrode current collector 100 may be formed as a single element.

Because only the central part of the body portion 110 is split, withdrawal of the electrode assembly 10 may be facilitated. Further, because no separate fixing parts are required, it may be possible to shorten a time required for an assembly process and to reduce transportation costs of parts. In one or more embodiments, the thickness of the extension portion 120 facing the cutting hole 330 may be approximately 0.5 mm or more.

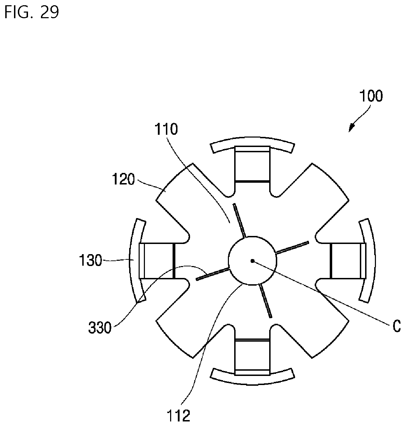

FIGs. 28 and 29 are plan views showing various embodiments of cutting holes 320 and 330 in the negative electrode current collector 100 including the central hole 112 formed therein.

As shown in FIG. 28, in a state in which the central hole 112 is at the center of the body portion 110, the cutting hole 320 may be in the body portion 110 and each of the one or more extension portions 120 of the negative electrode current collector 100. Because the cutting hole 320 does not extend to the end of the extension portion 120, the negative electrode current collector 100 may be formed as a single element (i.e., the negative electrode current collector 100 may not be separated into two or more parts by the cutting hole 320). The cutting hole 320 may pass through the center point C of the body portion 110 and may extend radially outward therefrom. The cutting hole 320 may have a cross shape.

As shown in FIG. 29, the central hole 112 is at the center of the body portion 110, and the cutting hole 330 may be formed only in the body portion 110. In this embodiment, an end of the cutting hole 330 may not communicate with the outside of the body portion 110. Therefore, the negative electrode current collector 100 may be formed as a single element.

In the cylindrical secondary battery according to the embodiment, in response to a fire occurring or the pressure in the cylindrical can 20 increasing, the negative electrode current collector 100 may be cut or deformed along the notch groove 200 or 210 such that the electrode assembly 10 may be easily taken out of the cylindrical can 20. In some embodiments, in response to a fire occurring or the pressure in the cylindrical can 20 increasing, the negative electrode current collector 100 may be split along the cutting hole 300, 310, 320, or 330 such that the electrode assembly 10 may be easily taken out of the cylindrical can 20.

As is apparent from the above description, in a cylindrical secondary battery according to the embodiment, in response to a fire occurring or the pressure in the cylindrical can increasing, a negative electrode current collector may be cut or deformed along a notch groove, and thus an electrode assembly may be easily taken out of the cylindrical can.

In some embodiments, in response to a fire occurring or the pressure in the cylindrical can increasing, the negative electrode current collector may be split along a cutting hole, and thus the electrode assembly may be easily taken out of the cylindrical can.

The above is only one embodiment for implementing an example cylindrical secondary battery according to the disclosure, the disclosure is not limited to the above embodiment, and it is to be understood by those skilled in the art that various modifications can be made without departing from the gist of the disclosure as claimed in the following claims.

Embodiments are set out in the following clauses.

Clause 1. A cylindrical secondary battery comprising: an electrode assembly comprising a negative electrode plate and a positive electrode plate; a cylindrical can accommodating the electrode assembly and comprising a terminal hole formed in one side thereof and an open inlet formed in an opposite side thereof; a terminal coupled to the cylindrical can through the terminal hole; and a negative electrode current collector located in the cylindrical can, electrically connecting the cylindrical can to the negative electrode plate, and comprising a notch groove or a cutting hole formed therein so as to be cut in response to increase in pressure in the cylindrical can.

Clause 2. The cylindrical secondary battery of Clause 1, wherein the notch groove or the cutting hole is formed so as to extend across the negative electrode current collector.

Clause 3. The cylindrical secondary battery of Clause 1, wherein the negative electrode current collector comprises: a body portion mounted in contact with the negative electrode plate; an extension portion extending outward from the body portion and mounted in contact with the negative electrode plate together with the body portion; and a wing portion extending outward from the body portion while being spaced apart from the extension portion and fixed to the cylindrical can, and wherein the notch groove or the cutting hole is formed in at least one of the body portion, the extension portion, or the wing portion.

Clause 4. The cylindrical secondary battery of Clause 3, wherein the body portion is formed in a circular plate shape and comprises a circular hole formed at a center thereof.

Clause 5. The cylindrical secondary battery of Clause 3, wherein each of the extension portion and the wing portion is provided in plural, and wherein the plurality of extension portions and the plurality of wing portions are alternately formed in a circumferential direction.

Clause 6. The cylindrical secondary battery of Clause 3, wherein the notch groove is formed in the body portion and the extension portion and is radially formed with respect to a center point located at a center of the body portion.

Clause 7. The cylindrical secondary battery of Clause 3, wherein the notch groove is formed in the body portion having a flat plate shape and is radially formed with respect to a center point located at a center of the body portion.

Clause 8. The cylindrical secondary battery of Clause 3, wherein the notch groove is formed in the body portion comprising a central hole formed therein and is radially formed with respect to the central hole located at a center of the body portion.

Clause 9. The cylindrical secondary battery of Clause 3, wherein the negative electrode current collector further comprises a central connection portion configured to connect a plurality of parts of the body portion divided by the cutting hole.

Clause 10. The cylindrical secondary battery of Clause 9, wherein the central connection portion comprises: a first connection body mounted while facing the body portion; and a first fixing protrusion protruding from the first connection body to be inserted into a connection hole formed in the body portion and fixed to the body portion through deformation thereof by pressure of a press.

Clause 11. The cylindrical secondary battery of Clause 9, wherein the central connection portion comprises: a second connection body having a larger area than a central hole formed at a center of the body portion; and a second fixing protrusion protruding from the second connection body to be inserted into the central hole formed in the body portion and fixed to the body portion through deformation thereof by pressure of a press.

Clause 12. A cylindrical secondary battery comprising: an electrode assembly comprising a negative electrode plate and a positive electrode plate; a cylindrical can accommodating the electrode assembly and comprising a terminal hole formed in one side thereof and an open inlet formed in an opposite side thereof; a terminal coupled to the cylindrical can through the terminal hole; and a negative electrode current collector located in the cylindrical can, electrically connecting the cylindrical can to the negative electrode plate, and implemented as an assembly of a plurality of parts divided by a cutting hole, wherein the negative electrode current collector comprises: a body portion mounted in contact with the negative electrode plate; an extension portion extending outward from the body portion and mounted in contact with the negative electrode plate together with the body portion; a wing portion extending outward from the body portion while being spaced apart from the extension portion and fixed to the cylindrical can; and a central connection portion configured to connect a plurality of parts of the body portion divided by the cutting hole.

Clause 13. The cylindrical secondary battery of Clause 12, wherein the cutting hole is formed in the body portion and the extension portion and is radially formed with respect to a center point located at a center of the body portion.

Clause 14. The cylindrical secondary battery of Clause 12, wherein the cutting hole is formed in the body portion having a flat plate shape and is radially formed with respect to a center point located at a center of the body portion.

Clause 15. The cylindrical secondary battery of Clause 14, wherein each of the extension portion and the wing portion is provided in plural, wherein a number of the plurality of extension portions and a number of the plurality of wing portions are identical to each other, and wherein the body portion is split into a same number of parts as the number of the plurality of extension portions.

Clause 16. The cylindrical secondary battery of Clause 12, wherein the central connection portion is located at a center of the body portion.

Clause 17. The cylindrical secondary battery of Clause 16, wherein the body portion is formed in a planar shape and comprises a plurality of inner holes formed therein at a position facing the central connection portion.

Clause 18. The cylindrical secondary battery of Clause 17, wherein a number of the plurality of inner holes corresponds to the number of the plurality of wing portions.

Clause 19. The cylindrical secondary battery of Clause 17, wherein the central connection portion comprises: a third connection body mounted while facing the body portion; and a plurality of third fixing protrusions protruding from the third connection body to be inserted into the plurality of inner holes formed in the body portion and fixed to the body portion through deformation thereof by pressure of a press.

Clause 20. The cylindrical secondary battery of Clause 19, wherein the third connection body is mounted on any one of an upper side and a lower side of the body portion.

## Claims

1. A cylindrical secondary battery comprising:
an electrode assembly comprising a negative electrode plate and a positive electrode plate;
a cylindrical can accommodating the electrode assembly and comprising a terminal hole in one side of the cylindrical can and an open inlet in an opposite side of the cylindrical can;
a terminal coupled to the cylindrical can through the terminal hole; and
a negative electrode current collector in the cylindrical can and electrically connecting the cylindrical can to the negative electrode plate, the negative electrode current collector comprising a notch groove or a cutting hole configured to open in response to an increase in pressure in the cylindrical can.

2. The cylindrical secondary battery as claimed in claim 1, wherein the notch groove or the cutting hole extends across the negative electrode current collector.

3. The cylindrical secondary battery as claimed in claim 1 or 2, wherein the negative electrode current collector comprises:
a body portion in contact with the negative electrode plate;
at least one extension portion extending outward from the body portion and in contact with the negative electrode plate; and
at least one wing portion extending outward from the body portion, the at least one wing portion being spaced apart from the at least one extension portion and fixed to the cylindrical can, and
wherein the notch groove or the cutting hole is in at least one of the body portion, the at least one extension portion, or the at least one wing portion.

4. The cylindrical secondary battery as claimed in claim 3, wherein the body portion has a circular plate shape and comprises a circular hole at a center of the body portion.

5. The cylindrical secondary battery as claimed in claim 3 or 4, wherein the at least one extension portion comprises a plurality of extension portions,
wherein the at least one wing portion comprises a plurality of wing portions, and
wherein the plurality of extension portions and the plurality of wing portions are alternately arranged in a circumferential direction.

6. The cylindrical secondary battery as claimed in claim 3, 4 or 5, wherein the notch groove is in the body portion and the at least one extension portion and wherein the notch groove extends radially outward with respect to a center point at a center of the body portion.

7. The cylindrical secondary battery as claimed in claim 3, 4 or 5, wherein the notch groove is in the body portion, the body portion having a flat plate shape, and wherein the notch groove extends radially outward with respect to a center point at a center of the body portion.

8. The cylindrical secondary battery as claimed in claim 3, 4 or 5, wherein the notch groove is in the body portion, the body portion comprising a central hole at a center of the body portion, and wherein the notch groove extends radially outward with respect to the central hole.

9. The cylindrical secondary battery as claimed in any one of claims 3 to 8, wherein the body portion is divided into a plurality of parts by the notch groove or cutting hole, and wherein the negative electrode current collector further comprises a central connection portion configured to connect the plurality of parts of the body portion divided by the cutting hole,
wherein optionally the central connection portion comprises at least one of:
a first connection body facing the body portion; and
a first fixing protrusion protruding from the first connection body and extending into a connection hole in the body portion, the first fixing protrusion comprising a deformed portion coupling the central connection portion to the body portion; and/or
a second connection body having a larger area than a central hole at a center of the body portion; and
a second fixing protrusion protruding from the second connection body and extending into the central hole in the body portion, the second fixing protrusion comprising a deformed portion coupling the central connection portion to the body portion.

10. A cylindrical secondary battery comprising:
an electrode assembly comprising a negative electrode plate and a positive electrode plate;
a cylindrical can accommodating the electrode assembly and comprising a terminal hole in one side of the cylindrical can and an open inlet in an opposite side of the cylindrical can;
a terminal coupled to the cylindrical can through the terminal hole; and
a negative electrode current collector in the cylindrical can and electrically connecting the cylindrical can to the negative electrode plate, the negative electrode current collector comprising an assembly of a plurality of parts divided by a cutting hole,
wherein the negative electrode current collector comprises:
a body portion in contact with the negative electrode plate;
at least one extension portion outward from the body portion and in contact with the negative electrode plate;
at least one wing portion extending outward from the body portion, the at least one wing portion being spaced apart from the at least one extension portion and fixed to the cylindrical can; and
a central connection portion configured to connect the plurality of parts divided by the cutting hole.

11. The cylindrical secondary battery as claimed in claim 10, wherein the cutting hole is in the body portion and the at least one extension portion extends radially outward with respect to a center point at a center of the body portion.

12. The cylindrical secondary battery as claimed in claim 10, wherein the cutting hole is in the body portion, the body portion having a flat plate shape, and wherein the cutting hole extends radially outward with respect to a center point at a center of the body portion.

13. The cylindrical secondary battery as claimed in claim 11 or 12, wherein the at least one extension portion comprises a plurality of extension portions,
wherein the at least one wing portion comprises a plurality of wing portions,
wherein a number of the plurality of extension portions and a number of the plurality of wing portions are identical to each other, and
wherein the body portion is split into a same number of parts as the number of the plurality of extension portions.

14. The cylindrical secondary battery as claimed in claim 11, 12, or 13, wherein the central connection portion is at a center of the body portion,
and wherein optionally the body portion has a planar shape and comprises a plurality of inner holes facing the central connection portion,
and wherein further optionally a number of the plurality of inner holes is equal to the number of the plurality of wing portions.

15. The cylindrical secondary battery as claimed in claim 14, wherein the central connection portion comprises:
a third connection body facing the body portion; and
a plurality of third fixing protrusions protruding from the third connection body and extending into the plurality of inner holes in the body portion, each of the plurality of third fixing protrusions comprising a deformed portion coupling the central connection portion to the body portion,
and wherein optionally the third connection body is on any one of an upper side or a lower side of the body portion.
